# FASCICULE DE BREVET EUROPEEN

(11) **EP 3 013 037 B1**
(45) Date de publication et mention de la délivrance du brevet: **27.06.2018**
(21) Numéro de dépôt: 15190265.7
(22) Date de dépôt: 16.10.2015
(51) Int. Cl.: H04N 5/355, H04N 5/3745

(54) **PIXEL DE CAPTEUR D'IMAGE AYANT DE MULTIPLES GAINS DE NOEUD DE DÉTECTION**
PIXEL EINES BILDSENSORS, DER MEHRERE VERSTÄRKUNGEN DES ERFASSUNGSKNOTENS UMFASST
PIXEL OF IMAGE SENSOR HAVING MULTIPLE DETECTION NODE GAINS

(30) Priorité: 21.10.2014 FR 1460106
(43) Date de publication de la demande: 27.04.2016
(73) Titulaire: COMMISSARIAT À L'ÉNERGIE ATOMIQUE ET AUX ÉNERGIES ALTERNATIVES, 75015 Paris (FR)
(72) Inventeur: GUILLON, Marie, 38120 FONTANIL-CORNILLON (FR); CAZAUX, Yvon, 38100 GRENOBLE (FR); SEGURA PUCHADES, Josep, 38600 FONTAINE (FR)
(74) Mandataire: Cabinet Beaumont

(56) Documents cités:
- WO-A1-2010/097389
- WO-A2-2008/027193
- US-A1- 2012 188 427
- US-A1- 2013 033 631

## Description

### Domaine

La présente description concerne le domaine des capteurs d'image, et en particulier un capteur d'image comportant des pixels munis de photodiodes à potentiel fixé, appelée aussi "photodiodes pincées" et ayant de multiples gains de noeud de détection.

### Exposé de l'art antérieur

Les capteurs d'image CMOS comprennent en général un réseau de pixels dont chacun comporte une photodiode à potentiel fixé qui accumule des charges pendant une période d'intégration. La charge accumulée est ensuite transférée vers un noeud de détection du pixel avant d'être lue. La sensibilité d'un tel circuit, de même que sa plage dynamique, dépend au moins partiellement de la taille de la capacité du noeud de détection. En effet, un niveau de capacité relativement faible conduit à une sensibilité élevée, mais à une faible plage dynamique. Un niveau de capacité relativement élevé conduit à une plage de dynamique élevée, mais à une faible sensibilité.

C'est un défi permanent dans le domaine des capteurs d'image que d'obtenir des pixels ayant à la fois une sensibilité élevée et une plage dynamique élevée, sans augmenter fortement la taille ou la consommation d'énergie du capteur d'image.

La demande de brevet PCT publiée sous le numéro WO2010/097389 décrit un détecteur infrarouge et une technique d'ajout d'une fonction de détection de signal pour effectuer des détections de cibles à des taux de données élevés.

La demande de brevet américain publiée sous le numéro US2013/033631 décrit un capteur d'images comprenant des pixels configurés à convertir des vagues électromagnétiques en charge.

### Résumé

Un objet de modes de réalisation de la présente description est de résoudre au moins partiellement un ou plusieurs problèmes de l'art antérieur.

Selon un aspect, on prévoit un capteur d'image comprenant : au moins un pixel comportant une photodiode ; un noeud de détection couplé à la photodiode par l'intermédiaire d'une porte de transfert ; et un autre noeud couplé au noeud de détection par l'intermédiaire d'un premier transistor ; et un circuit de commande adapté à : appliquer, pendant une opération de réinitialisation des niveaux de tension sur le noeud de détection et sur l'autre noeud, un premier niveau de tension à un noeud de commande du premier transistor ; et appliquer, pendant une opération de transfert de charge à partir de la photodiode vers le noeud de détection, un deuxième niveau de tension au noeud de commande du premier transistor, le deuxième niveau de tension étant inférieur au premier niveau de tension et supérieur à une tension de masse du pixel; et réaliser, après l'opération de transfert, une première opération de lecture pour générer une première valeur sur la base de la tension sur le noeud de détection pendant l'application du deuxième niveau de tension au noeud de commande du premier transistor, et une deuxième opération de lecture pour générer une deuxième valeur sur la base de la tension sur le noeud de détection pendant l'application du premier niveau de tension au noeud de commande du premier transistor.

Selon un mode de réalisation, le deuxième niveau de tension est inférieur à VRT+V_{TH} et supérieur à VPD+V_{TH}, où VRT est un niveau de tension de réinitialisation appliqué au noeud de détection et à l'autre noeud pendant l'opération de réinitialisation, VPD est un niveau de tension fixé de la photodiode et V_{TH} est un niveau de tension de seuil du premier transistor.

Selon un mode de réalisation, pendant l'opération de transfert, le circuit de commande est en outre adapté à appliquer le premier niveau de tension à un noeud de commande de la porte de transfert.

Selon un mode de réalisation, le circuit de commande est en outre adapté à : réaliser, après l'opération de transfert, une première opération de lecture pour générer une première valeur sur la base de la tension sur le noeud de détection ; et comparer la première valeur à un niveau de seuil.

Selon un mode de réalisation, le capteur d'image comprend en outre un bloc de sortie couplé au noeud de détection par l'intermédiaire d'un circuit de lecture du pixel, dans lequel sur la base de la comparaison de la première valeur au niveau de seuil, le bloc de sortie est agencé pour : générer une valeur de pixel sur la base de la première valeur ; ou générer une valeur de pixel sur la base de la deuxième valeur.

Selon un mode de réalisation, ledit au moins un autre pixel comprend un transistor de réinitialisation ayant l'un de ses noeuds de courant principaux connecté à l'autre noeud et son autre noeud de courant principal couplé à un rail de tension d'alimentation.

Selon un mode de réalisation, ledit au moins un pixel comprend en outre un transistor de réinitialisation ayant l'un de ses noeuds de courant principaux connecté au noeud de détection et son autre noeud de courant principal couplé à un rail de tension d'alimentation.

Selon un mode de réalisation, ledit au moins un pixel comprend en outre une deuxième porte de transfert couplée entre la photodiode et un rail de tension d'alimentation.

Selon un mode de réalisation, le circuit de commande est adapté à contrôler la deuxième porte de transfert dudit au moins un pixel pour réinitialiser la photodiode pour réaliser une réinitialisation globale du capteur d'image.

Selon un autre aspect, on prévoit un procédé pour actionner au moins un pixel d'un capteur d'image, ledit au moins un pixel comportant : une photodiode ; un noeud de détection couplé à la photodiode par l'intermédiaire d'une porte de transfert ; et un autre noeud couplé au noeud de détection par l'intermédiaire d'un premier transistor, le procédé comprenant : appliquer, par un circuit de commande pendant une opération de réinitialisation des niveaux de tension sur le noeud de détection et l'autre noeud, un premier niveau de tension sur un noeud de commande du premier transistor ; et appliquer, par le circuit de commande pendant une opération de transfert de charge à partir de la photodiode vers le noeud de détection, un deuxième niveau de tension au noeud de commande du premier transistor, le deuxième niveau de tension étant inférieur au premier niveau de tension et supérieur à une tension de masse du pixel; et réaliser, après l'opération de transfert, une première opération de lecture pour générer une première valeur sur la base de la tension sur le noeud de détection pendant l'application du deuxième niveau de tension au noeud de commande du premier transistor, et une deuxième opération de lecture pour générer une deuxième valeur sur la base de la tension sur le noeud de détection pendant l'application du premier niveau de tension au noeud de commande du premier transistor.

Selon un mode de réalisation, le deuxième niveau de tension est inférieur à VRT+V_{TH} et supérieur à VPD+V_{TH}, où VRT est un niveau de tension de réinitialisation appliqué au noeud de détection et à l'autre noeud pendant l'opération de réinitialisation, VPD est le niveau de tension fixé de la photodiode et V_{TH} est un niveau de seuil du premier transistor.

Selon un mode de réalisation, le procédé comprend en outre l'application, pendant l'opération de transfert, du deuxième niveau de tension à la porte de transfert.

Selon un mode de réalisation, le procédé comprend en outre : réaliser, après l'opération de transfert, une première opération de lecture pour générer une première valeur sur la base de la tension sur le noeud de détection ; et comparer la première valeur à un niveau de seuil.

Selon un mode de réalisation, le procédé comprend en outre : sur la base de la comparaison de la première valeur au niveau de seuil : soit générer une valeur de pixel sur la base de la première valeur ; soit générer une valeur de pixel sur la base de la deuxième valeur.

### Brève description des dessins

Les avantages susmentionnés, et d'autres, apparaîtront clairement à la lecture de la description détaillée suivante de modes de réalisation, donnée à titre illustratif et non limitatif, en faisant référence aux dessins joints dans lesquels :
la figure 1 illustre schématiquement un pixel selon un mode de réalisation de la présente description ;
la figure 2 est un organigramme représentant des étapes dans un procédé d'actionnement d'un pixel d'un capteur d'image selon un mode de réalisation de la présente description ;
les figures 3A à 3E sont des diagrammes représentant le transfert de charges entre des noeuds du pixel de la figure 1 pendant des opérations de réinitialisation, de transfert et de lecture selon un exemple de réalisation ;
la figure 4 est un graphique représentant la relation entre la charge accumulée et des niveaux de tension de lecture dans le pixel de la figure 1 selon un exemple de réalisation ;
la figure 5 illustre schématiquement un circuit de sortie du pixel de la figure 1 plus en détail selon un exemple de réalisation ; et
la figure 6 est un chronogramme illustrant des signaux dans un pixel pendant des opérations de réinitialisation, de transfert et de lecture selon un exemple de réalisation.

### Description détaillée

Dans la description suivante, le terme "connecté" est utilisé pour désigner une connexion directe entre un élément et un autre, tandis que le terme "couplé" implique que la connexion entre les deux éléments peut être directe, ou se faire via un élément intermédiaire, comme un transistor, une résistance ou un autre composant.

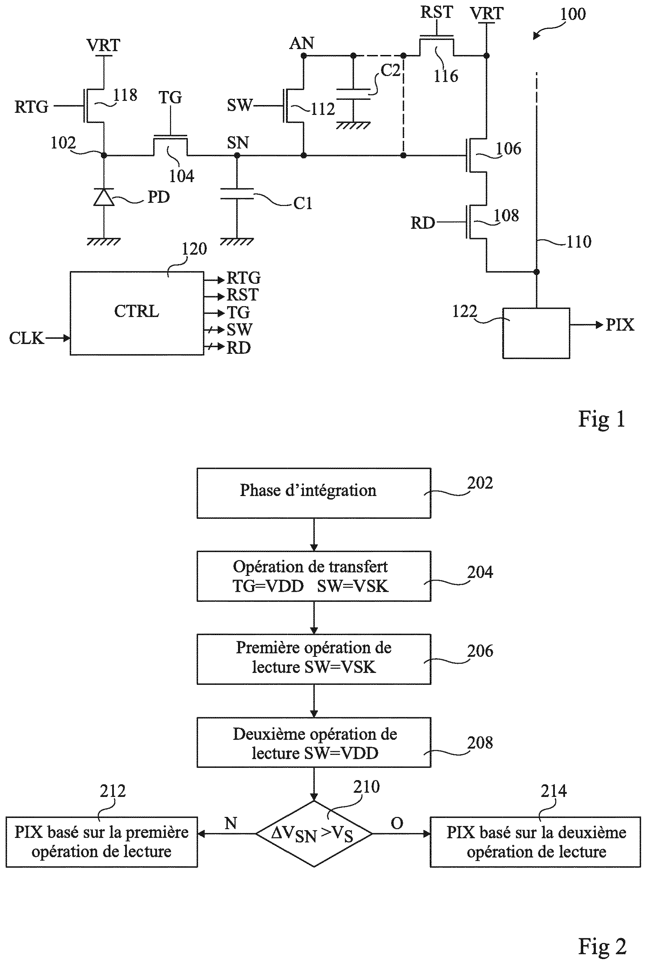

La figure 1 illustre schématiquement un pixel 100 d'un capteur d'image selon un exemple de réalisation. Le pixel 100 fait par exemple partie d'un réseau d'une pluralité de pixels agencés en rangées et en colonnes formant le capteur d'image.

Le pixel 100 comprend une photodiode à potentiel fixé PD. Comme cela est connu dans la technique, les photodiodes à potentiel fixé ont leur tension fixée à un certain niveau, désigné ici VPD. Par exemple, la photodiode est fixée à une tension d'environ 1,5 V, et plus généralement à une tension comprise entre 1 et 2 V.

La photodiode à potentiel fixé PD est couplée entre la tension de masse et un noeud 102. Le noeud 102 est en outre couplé à un noeud de détection SN du pixel par l'intermédiaire d'une porte de transfert 104, qui est par exemple contrôlée par un signal de porte de transfert TG. Le noeud de détection SN a une capacité C_{SN}, qui résulte par exemple seulement des capacités parasites de composants voisins, ou qui peut résulter en plus de la capacité d'un condensateur C1 couplé optionnellement entre le noeud de détection SN et un niveau de tension de masse ou de masse virtuelle. Dans certains modes de réalisation, la capacité C_{SN} est relativement faible, par exemple de 10 fF ou moins.

Le noeud de détection SN est en outre couplé à un circuit de lecture du pixel. Dans l'exemple de la figure 1, le circuit de lecture comprend un transistor 106 couplé dans un montage en source suiveuse, avec son noeud de commande couplé au noeud de détection SN, et sa source couplée par l'intermédiaire d'un transistor 108 à une ligne de colonne de sortie 110 du pixel. Le transistor 106 a par exemple son drain couplé à une tension d'alimentation VRT du pixel. Le transistor 108 est contrôlé par un signal de lecture RD. Dans des variantes de réalisation, un agencement différent du circuit de lecture serait possible, par exemple avec le transistor de lecture 108 couplé entre le drain du transistor 106 et la tension d'alimentation VRT.

Le pixel 100 comprend en outre un noeud additionnel AN. Le noeud additionnel AN est couplé au noeud de détection SN par l'intermédiaire des noeuds de conduction principaux d'un transistor 112, qui est par exemple un transistor NMOS, et qui a son noeud de commande couplé de façon à recevoir un signal de commande SW. Le noeud additionnel AN a une capacité C_{AN}, qui résulte par exemple seulement des capacités parasites des composants environnants ou qui peut résulter en plus de la capacité d'un condensateur C2 couplé entre le noeud additionnel AN et le niveau de tension de masse ou de masse virtuelle. La capacité C_{AN} est par exemple supérieure à la capacité C_{SN} du noeud de détection SN, et est par exemple de 10 fF ou plus. La capacité C_{SN} est par exemple choisie de telle sorte que la capacité combinée C_{SN}+C_{AN} puisse supporter la charge maximum qui peut être transférée à partir de la photodiode PD. Dans certains modes de réalisation, la capacité C_{AN} est au moins dix fois plus grande que la capacité C_{SN}.

Le pixel 100 comprend en outre un transistor 116 couplé par ses noeuds de conduction principaux entre la tension d'alimentation du pixel VRT et soit le noeud additionnel AN soit le noeud de détection SN. Le transistor 116 est par exemple un transistor NMOS contrôlé au niveau de son noeud de commande par un signal de réinitialisation RST. Le pixel 100 peut aussi comprendre une porte de transfert 118 couplée entre le noeud 102 et la tension d'alimentation VRT du pixel. La porte de transfert 118 reçoit un signal RTG pour réinitialiser la tension de la photodiode.

Les signaux TG, RD, SW, RST et RTG destinés à contrôler les transistors/portes 104, 108, 112, 116 et 118 du pixel sont par exemple respectivement fournis par un circuit de commande (CTRL) 120. Le circuit de commande 120 est par exemple commun pour un groupe de pixels du capteur d'image, comme une rangée de pixels. Le circuit de commande 120 reçoit par exemple un signal de synchronisation CLK, et est par exemple mis en oeuvre par un ASIC (circuit intégré spécifique d'application), bien que dans des variantes de réalisation il pourrait être au moins partiellement mis en oeuvre par un processeur exécutant des instructions de logiciel.

La figure 1 illustre aussi un bloc de sortie 122 couplé à la ligne de colonne 110 et associé par exemple à une colonne de pixels. Le bloc de sortie 122 comprend par exemple des circuits échantillonneurs-bloqueurs pour échantillonner des niveaux de tension lus sur le pixel 100, et comprend aussi une circuiterie destinée à générer une valeur de pixel de sortie PIX sur la base des niveaux de tension lus dans le pixel comme on va le décrire plus en détail ci-après.

Le fonctionnement du pixel de la figure 1 va maintenant être décrit plus en détail en faisant référence à l'organigramme de la figure 2.

La figure 2 illustre des opérations réalisées par le pixel 100 et le bloc de sortie 122 de la figure 1 sous le contrôle du circuit de commande 120 pendant une capture d'image et une lecture. Il est ainsi supposé que le circuit est alimenté, et qu'une séquence de capture d'image a été déclenchée. Par exemple, le capteur d'image fait partie d'un dispositif de capture d'image, comme une caméra, un téléphone mobile ou similaire, et un utilisateur du dispositif de capture d'image a fourni un élément d'entrée pour provoquer la capture d'une image ou de vidéo.

Dans une opération 202, une phase d'intégration de la photodiode a lieu. La phase d'intégration est par exemple lancée en réinitialisation la tension de la photodiode en activant le signal RTG pour activer la porte de transfert 118 et coupler la photodiode à la tension d'alimentation VRT. La tension sur le noeud 102 est ainsi par exemple réinitialisée au niveau de la tension fixé VPD de la photodiode. Dans des variantes de réalisation, la porte de transfert 118 pourrait être omise, et la photodiode pourrait être réinitialisée par l'intermédiaire d'un autre canal, par exemple en activant la porte de transfert 104, après avoir réinitialisée la tension sur le noeud de détection SN à la tension VRT.

Une opération suivante 204 a lieu à la fin de la phase d'intégration, et correspond à une opération de transfert. A un certain point avant l'opération de transfert, une opération de réinitialisation est réalisée pour réinitialiser les niveaux de tension sur le noeud de détection SN et sur le noeud additionnel AN. Pendant cette opération de réinitialisation, un niveau de tension, par exemple à VDD, est appliqué sous forme de signaux de tension SW et RST sur les noeuds de commande des transistors 112 et 116 respectivement, pour rendre ces transistors conducteurs, ce qui permet de réinitialiser les deux noeuds SN et AN.

Pendant l'opération de transfert, la charge accumulée par la photodiode pendant la phase d'intégration est transférée de la photodiode PD vers le noeud de détection SN en activant la porte de transfert 104. Par exemple, un niveau de tension d'alimentation VDD est appliqué à la porte de transfert 104. Pendant toute l'opération de transfert, le signal de tension SW sur le noeud de commande du transistor 112 est à un niveau de tension intermédiaire VSK, aussi appelé ici niveau de tension d'écrémage, qui est supérieur à la tension de masse du pixel et inférieur à la tension d'alimentation VDD. Par exemple, la tension VSK est supérieure à VPD+V_{TH}, VPD étant le niveau de tension fixe de la photodiode, et V_{TH} étant la tension de seuil du transistor 112. Le niveau de tension VSK est aussi par exemple à un niveau inférieur à VRT+V_{TH}, VRT étant le niveau de tension de réinitialisation appliqué au noeud de détection SN ou au noeud additionnel AN par l'intermédiaire du transistor de réinitialisation 116. En d'autres termes, le niveau de VSK est par exemple réglé de telle sorte que le transistor 112 soit conducteur pour une sous-plage des niveaux de tension possibles de V_{SN} à la suite d'une opération de transfert.

L'effet de l'application d'une tension intermédiaire VSK au noeud de commande du transistor 112 est que, lorsque la charge sur le noeud de détection SN dépasse un certain niveau, elle va déborder vers le noeud additionnel AN. En effet, la quantité de charge négative transférée à partir de la photodiode PD peut provoquer une chute de la tension sur le noeud de détection SN en dessous du niveau VSK moins la tension de seuil V_{TH} du transistor 112, et ainsi une certaine partie de la charge négative va être transférée ou "écrémée" à partir du noeud de détection SN vers le noeud additionnel AN jusqu'à ce que la tension sur le noeud de détection SN s'établisse à un niveau de VSK-V_{TH}.

Dans une opération suivante 206, une première opération de lecture de la tension V_{SN} sur le noeud de détection SN est réalisée, avec le signal SW encore au niveau de VSK. Si pendant l'opération de transfert aucune charge n'a été écrémée à partir du noeud de détection SN vers le noeud additionnel AN, la tension V_{SN} va être égale à au moins VSK-V_{TH}. De façon plus précise, la tension V_{SN} va être égale à (VRT-V_{COUP}-Q/C_{SN}), où V_{COUP} est une chute de tension de couplage aux bornes du transistor 112, Q est la charge transférée à partir de la photodiode vers le noeud de détection SN, et C_{SN} est la capacité du noeud de détection SN. Dans l'autre cas, si une charge a été transférée vers le noeud additionnel AN pendant l'opération de transfert, la tension V_{SN} est bridée à un niveau égal à VSK-V_{TH}. Un signal différentiel ΔV_{SN} est par exemple généré pendant la première opération de lecture en soustrayant la tension V_{SN} d'un niveau de réinitialisation V_{RSN} lu par le bloc de sortie 122 pendant que le signal SW est au niveau de tension VSK, V_{RSN} étant par exemple égal à VRT-V_{COUP}. En d'autres termes, ΔV_{SN=}V_{RSN}-V_{SN}. Ainsi ΔV_{SN} est égal à Q/C_{SN}.

Dans une opération suivante 208, une deuxième opération de lecture est réalisée pour lire un niveau de tension V_{SN+AN} associé au noeud de détection SN lorsqu'il est connecté au noeud additionnel AN. En particulier, la deuxième opération de lecture est réalisée avec le signal de commande SW à un niveau supérieur à VSK, par exemple au niveau de la tension d'alimentation VDD. Ainsi, la charge totale transférée à partir de la photodiode pendant l'opération de transfert est partagée entre les deux noeuds SN et AN, et la tension correspondante sur le noeud de détection SN est lue. La valeur de tension va alors être égale à VRT-V_{COUP}-Q/(C_{SN}+C_{AN}+C_{SW}), C_{SN} étant la capacité du noeud de détection SN, C_{AN} étant la capacité du noeud de détection AN, et C_{SW} étant la capacité parasite introduite par le transistor 112. Un signal différentiel ΔV_{SN+AN} est par exemple généré pendant la deuxième opération de lecture en soustrayant la tension V_{SN+AN} d'un niveau de réinitialisation V_{RSN+AN} lu par le bloc de sortie 122 pendant que le signal SW est au niveau supérieur à VSK, par exemple au niveau de la tension d'alimentation VDD. En d'autres termes, ΔV_{SN+AN}=V_{RSN+AN}-V_{SN+AN}. Cette valeur va être égale à Q/(C_{SN}+C_{AN}+C_{SW}).

Dans une opération suivante 210, le signal différentiel ΔV_{SN} basé sur la tension V_{SN} lue sur le noeud de détection SN pendant la première opération de lecture est comparé à un niveau de seuil V_{S}. Cette opération est par exemple réalisée par le bloc de sortie 122 de la figure 1. Bien sûr, il apparaîtra clairement à l'homme de l'art que les niveaux de tension décrits ici en relation avec le pixel, comme VRT, V_{SN}, V_{RSN}, ΔV_{SN} etc., sont les valeurs associées au pixel, qui sont susceptibles d'être altérées par une chaîne de gain appliquée par le transistor 106 et le bloc de sortie 122. Le niveau de seuil V_{S} est par exemple choisi pour correspondre à une valeur associée au pixel égale ou inférieure à (VRT-V_{COUP})-(VSK-V_{TH}), par exemple entre 50 et 95 % de (VRT-V_{COUP})-(VSK-V_{TH}), où VRT est un niveau de réinitialisation appliqué au noeud de détection SN.

Si dans l'opération 210 la tension ΔV_{SN} est déterminée comme étant inférieure au niveau de seuil V_{S}, l'opération suivante est l'opération 212, dans laquelle le bloc de sortie 122 génère la valeur du pixel de sortie PIX sur la base du niveau de tension ΔV_{SN} lu pendant l'opération de lecture.

Autrement, si dans l'opération 210 la tension ΔV_{SN} est déterminée comme étant supérieure au niveau de seuil V_{S}, l'opération suivante est l'opération 214, dans laquelle le bloc de sortie 122 génère la valeur du pixel de sortie PIX sur la base du niveau de tension ΔV_{SN+AN} lu pendant la deuxième opération de lecture. Par exemple, la valeur de pixel PIX est alors déterminée comme égale à G.ΔV_{SN+AN}, où G est un gain. Par exemple, le gain G est égal à (C_{SN}+C_{AN}+C_{SW})/C_{SN}, C_{SN} et C_{AN} étant les capacités sur les noeuds SN et AN respectivement, et C_{SW} étant une capacité associée au transistor 112 pendant que le signal SW est au niveau de la tension d'alimentation VDD. Cette valeur est équivalente à un transfert de charge complet vers une capacité de C_{SN}, et ainsi une haute sensibilité est obtenue avec une plage dynamique étendue.

Il apparaîtra clairement à l'homme de l'art que l'ordre des opérations de la figure 2 pourrait être changé. Par exemple, dans certains modes de réalisation, la deuxième opération de lecture 208 pourrait être réalisée après l'opération de comparaison 210. En outre, bien que dans l'exemple de la figure 2 la deuxième opération de lecture soit toujours réalisée, dans des variantes de réalisation la deuxième opération de lecture pourrait être réalisée seulement si pendant l'opération de comparaison on détecte que le niveau de tension ΔV_{SN} est supérieur à V_{S}.

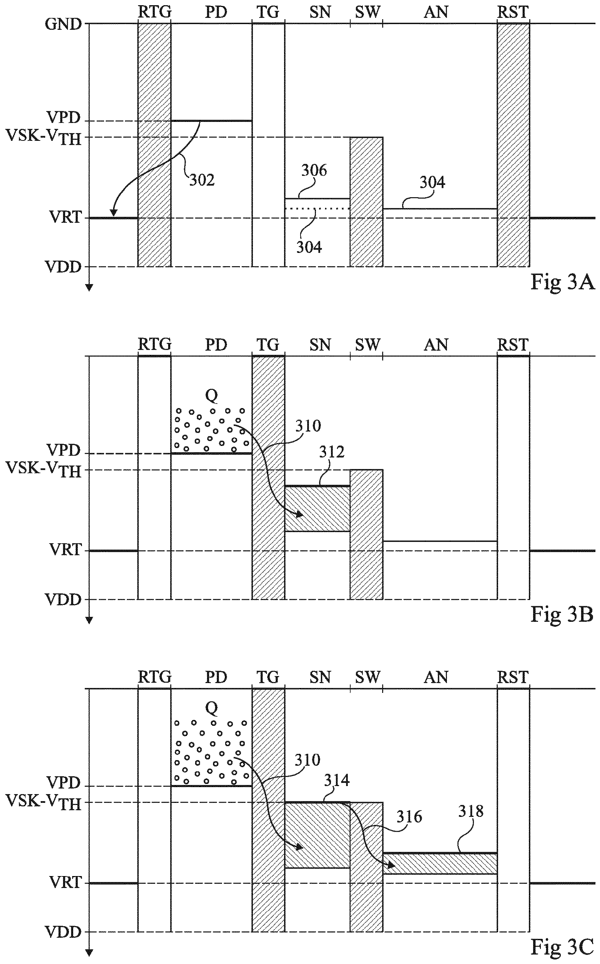

Les figures 3A à 3E sont des diagrammes représentant le transfert de charge entre les noeuds dans le pixel de la figure 1 pendant des phases de réinitialisation, d'intégration et de lecture, selon un exemple de réalisation. En particulier, chacun des diagrammes représente, de gauche à droite, le niveau de tension d'alimentation du pixel VRT, la tension de commande RTG, la tension de la photodiode PD, la tension de commande TG, la tension sur le noeud de détection SN, la tension de commande SW, la tension sur le noeud additionnel AN, et la tension de commande RST. Comme cela est illustré, la tension VRT est par exemple à un niveau inférieur à la tension d'alimentation VDD, et le niveau de tension VPD auquel la photodiode est fixée est par exemple à un niveau inférieur à la tension VRT. Par exemple, la tension d'alimentation VDD est à un niveau compris entre 3,3 et 3,6 V, la tension d'alimentation VRT est à un niveau compris entre 2,5 et 3 V, et le niveau fixe VPD de la photodiode est compris entre 1 et 1,6 V. Le niveau de tension VRT correspond par exemple au niveau de tension VDD moins la tension de seuil MOS V_{TH} du transistor 112.

La figure 3A représente une opération de réinitialisation de la photodiode PD. En particulier, le signal de commande RTG est par exemple activé au niveau de la tension d'alimentation VDD, et toute charge présente sur la photodiode est donc évacuée vers le rail d'alimentation VRT, comme cela est représenté par une flèche 302.

La figure 3A représente aussi une opération de réinitialisation des tensions sur le noeud de détection SN et sur le noeud additionnel AN. Bien que cela soit représenté dans le même diagramme que la réinitialisation de la photodiode PD, la réinitialisation du noeud de détection SN et du noeud additionnel AN a lieu par exemple à un instant différent, comme à la fin de l'opération de lecture d'une valeur de pixel précédente, ou juste avant l'opération de transfert si on est dans un mode de fonctionnement d'obturateur en rouleau. Les signaux de commande RST et SW sont par exemple tous les deux activés au niveau de la tension d'alimentation VDD, de sorte que les noeuds SN et AN sont tous les deux couplés à la tension d'alimentation VRT, et s'établissent à un niveau de tension représenté par une ligne 304 en figure 3A, qui est légèrement inférieur au niveau VRT en raison de la chute de tension de couplage aux bornes du transistor 116. Le signal SW est ensuite réduit au niveau VSK ou à la masse, ce qui provoque une chute de la tension sur le noeud de détection SN en raison de la chute de tension de couplage aux bornes du transistor 112, à un niveau représenté par une ligne 306 en figure 3A.

Les figures 3B et 3C représentent toutes les deux une opération de transfert réalisée à la fin de la période d'intégration. La figure 3B représente le cas dans lequel aucune charge n'est transférée vers le noeud additionnel AN pendant l'opération de transfert, tandis que la figure 3C représente le cas dans lequel des charges sont transférées vers le noeud additionnel AN pendant l'opération de transfert.

Comme cela est représenté en figure 3B, pendant l'opération de transfert, le signal de commande TG est amené au niveau de la tension d'alimentation VDD, et la tension de commande SW est amenée au niveau VSK. Cela provoque un flux de charge Q de la photodiode vers le noeud de détection SN, comme cela est représenté par une flèche 310. Le niveau de tension sur le noeud de détection SN descend ainsi à un niveau 312 qui est supérieur au niveau VSK-V_{TH}. Par conséquent, il n'y a pas de transfert de charge vers le noeud additionnel AN. L'opération de comparaison 210 de la figure 2 va par conséquent indiquer que le niveau de tension ΔV_{SN} est inférieur au niveau de seuil V_{S}, et ainsi la valeur de pixel PIX va être déterminée dans l'opération 212 sur la base de la tension lue pendant la première opération de lecture.

Comme dans la figure 3B, dans l'exemple de la figure 3C, le signal de commande TG est amené au niveau de la tension d'alimentation VDD, et la tension de commande SW est amenée au niveau VSK pendant l'opération de transfert. Cela provoque un flux de charge Q de la photodiode vers le noeud de détection SN comme cela est représenté par une flèche 310. Cependant, cette fois il y a davantage de charge, ce qui provoque une chute du niveau de tension sur le noeud de détection SN à un niveau 314 égal à VSK-V_{TH}. Des charges sont donc transférées vers le noeud additionnel AN, comme cela est représenté par une flèche 316, et la tension sur le noeud additionnel AN descend ainsi à un niveau 318. L'opération de comparaison 210 de la figure 2 va par conséquent indiquer que le niveau de tension ΔV_{SN} est supérieur au niveau de seuil V_{S}, et donc la valeur de pixel PIX va être déterminée dans l'opération 214 sur la base de la tension lue pendant la deuxième opération de lecture.

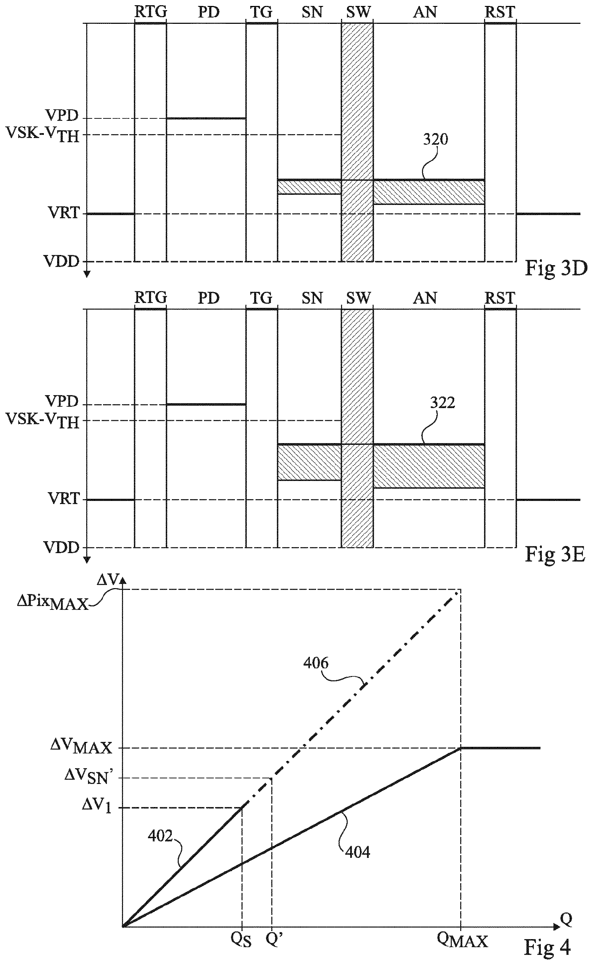

Les figures 3D et 3E représentent toutes les deux l'étape d'activation complète du transistor 112 juste avant la deuxième opération de lecture, par exemple en amenant le signal SW au niveau de tension VDD. Comme cela est représenté par des largeurs différentes des colonnes dans l'exemple de la figure 3C, le noeud additionnel AN a par exemple une capacité supérieure à celle du noeud de détection SN.

La figure 3D correspond au cas de la figure 3B, dans lequel aucune charge n'a été transférée vers le noeud additionnel AN pendant l'opération de transfert. Ainsi la charge sur le noeud de détection SN est partagée entre les noeuds SN et AN, et la tension descend à un niveau représenté par une ligne 320.

La figure 3E correspond au cas de la figure 3C, dans lequel des charges ont été transférées vers le noeud additionnel AN pendant l'opération de transfert. Ainsi les tensions sur les noeuds SN et AN s'égalisent à un niveau représenté par une ligne 322, supérieur au niveau 320 de la figure 3D.

La figure 4 est un graphique illustrant un exemple de la relation entre le niveau de charge Q accumulé par la photodiode pendant la période d'intégration et le signal différentiel ΔV correspondant détecté sur le noeud de détection SN pendant la première ou la deuxième opération de lecture.

Comme cela est représenté par une ligne en trait plein 402, jusqu'à un niveau de charge Q' correspondant à un changement de tension ΔV_{SN'} = V_{RSN}- (VSK-_{VTH}) sur le noeud de détection SN, aucune charge ne va être transférée vers le noeud additionnel AN et la valeur de tension lue pendant la première opération de lecture va être proportionnelle à la charge Q. La pente de la ligne 402 est par exemple fonction de 1/C_{SN}, où C_{SN} est la capacité du noeud de détection SN. La valeur de pixel PIX est calculée sur la base de la première opération de lecture seulement si la charge Q est inférieure à un niveau Q_{S}. Ce niveau de charge correspond à un changement de tension ΔV₁ lu pendant la première opération de lecture égal à la tension de seuil V_{S}. Ainsi, si la charge accumulée par la photodiode est comprise entre 0 et Q_{S}, la valeur de pixel PIX va être comprise entre 0 et ΔV₁.

Comme cela est représenté par une ligne en trait plein 404, le changement de tension ΔV_{SN+AN} détecté pendant la deuxième opération de lecture va être proportionnel à la charge Q avec une pente qui est fonction de 1/(C_{SN}+C_{AN}+C_{SW}), où C_{SN} et C_{AN} sont les capacités des noeuds SN et AN respectivement, et C_{SW} est la capacité associée au commutateur 112 lorsque le signal de commande SW est au niveau de tension VDD. Le changement de tension ΔV_{SN+AN} détecté pendant la deuxième opération de lecture est par exemple limité à un niveau ΔV_{MAX} = Q_{MAX}*(C_{SN}+C_{AN}+C_{SW}), où Q_{MAX} est le niveau maximum de charge qui peut être transféré à partir de la photodiode.

La ligne en trait mixte 406 en figure 4 représente un exemple de la valeur de pixel PIX calculée pour un niveau donné de charge de Q_{S} ou plus, qui est calculé en appliquant un gain G à la valeur lue le long de la ligne 404, le gain G correspondant par exemple à la valeur de gain G susmentionnée et étant égal à (C_{SN}+C_{AN}+C_{SW})/C_{SN}. La pente de la ligne en trait mixte 406 est par exemple sensiblement la même que celle de la ligne en trait plein 402, de sorte qu'il y a une relation sensiblement linéaire entre la charge accumulée et la valeur de pixel PIX.

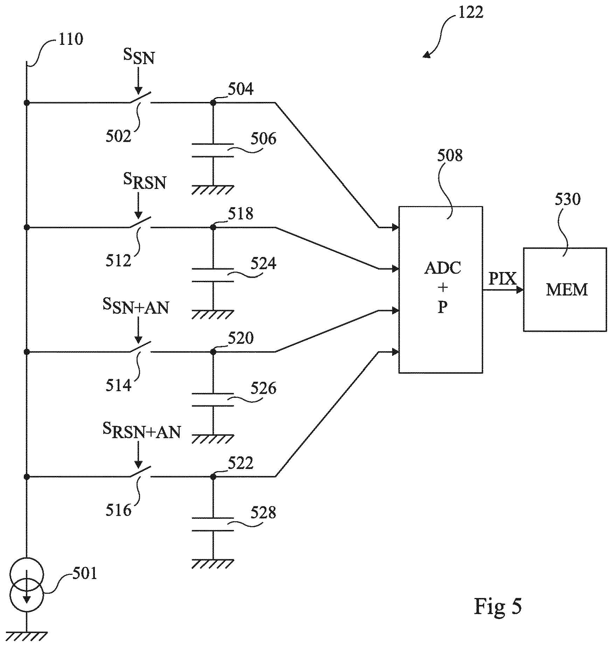

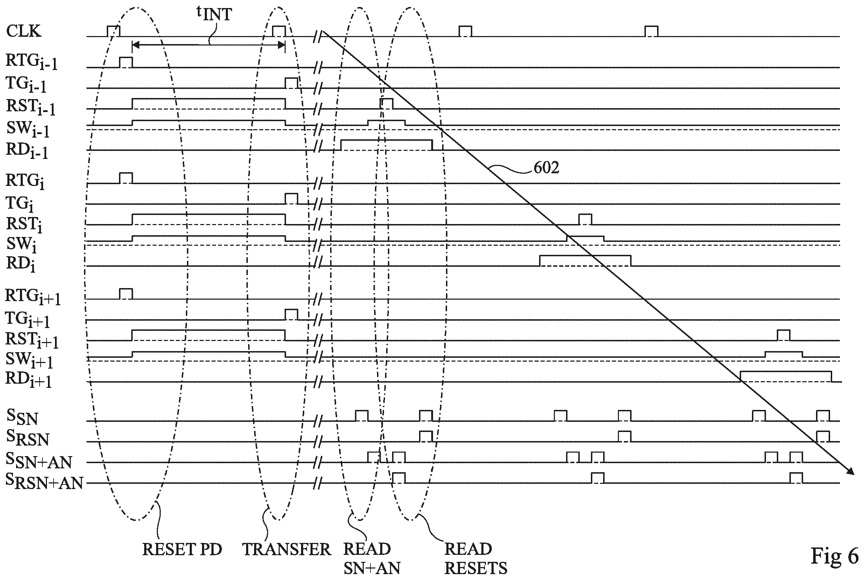

La figure 5 illustre schématiquement le bloc de sortie 122 de la figure 1 plus en détail selon un exemple de réalisation. La ligne de colonne 110 est par exemple couplée à la masse par l'intermédiaire d'une source de courant 501. En outre, la ligne de colonne 110 est couplée, par l'intermédiaire d'un commutateur 502 contrôlé par un signal d'échantillonnage S_{SN}, à un noeud 504. Le noeud 504 est à son tour couplé à la masse par l'intermédiaire d'un condensateur 506, et à un bloc convertisseur analogique-numérique et de traitement (ADC+P) 508. De façon similaire, la ligne de colonne 110 est par exemple couplée, par l'intermédiaire de commutateurs respectifs 512, 514 et 516, contrôlés par des signaux d'échantillonnage S_{RSN}, S_{SN+AN} et S_{RSN+AN} respectivement, à des noeuds respectifs 518, 520 et 522. Les noeuds 518, 520 et 522 sont à leur tour couplés à la masse par l'intermédiaire de condensateurs 524, 526 et 528 respectivement, et au bloc 508. Comme cela va être décrit plus en détail ci-après en référence à la figure 6, les signaux d'échantillonnage S_{SN}, S_{RSN}, S_{SN+AN},S_{RSN+AN} sont activés pour échantillonner la tension présente sur le noeud de détection SN d'un pixel sélectionné de la colonne, et les tensions lues sont mémorisées par les condensateurs 506, 524, 526 et 528. Le bloc 508 convertit par exemple chacune des tensions échantillonnées en une valeur numérique, et la valeur de sortie de pixel PIX est par exemple générée sur la base de ces valeurs numériques. Les valeurs de pixel PIX sont par exemple mémorisées dans une mémoire d'image (MEM) 530.

Il apparaitra clairement à l'homme de l'art que dans certains modes de réalisation le bloc de sortie 122 de la figure 1 peut comprendre d'autres circuits pour conditionner les signaux d'entrée et les signaux de multiplexage avant de les fournir au bloc 508.

La figure 6 est un chronogramme montrant des exemples du signal de synchronisation CLK fourni au bloc de commande 120, des signaux de commande RTG, TG, RST, SW et RD dans le pixel de la figure 1 pour une rangée de pixels de rang (i-1), pour une rangée de rang i, et pour une rangée de rang (i+1), et aussi des signaux d'échantillonnage S_{SN}, S_{RSN}, S_{SN+AN} et S_{RSN+AN} qui contrôlent par exemple les commutateurs du bloc de sortie 122 pour échantillonner la tension sur la ligne de colonne 110.

L'exemple de la figure 6 suppose que le transistor de réinitialisation 116 est connecté au noeud additionnel AN, plutôt qu'au noeud de détection SN. La manière dont la séquence de lecture pourrait être modifiée dans le cas où le transistor de réinitialisation 116 est connecté au lieu de cela au noeud de détection SN apparaîtra clairement à l'homme de l'art.

En outre, l'exemple de la figure 6 suppose aussi une opération d'obturateur global utilisant la porte de transfert 118. La façon dont une opération d'obturateur déroulant pourrait être obtenue avec ou sans la porte de transfert 118 apparaîtra clairement à l'homme de l'art. En particulier, la mise en oeuvre d'un obturateur déroulant implique un décalage des périodes d'intégration des pixels de chaque rangée l'une par rapport à l'autre de telle sorte que chaque rangée peut être lue peu de temps après la fin de sa période d'intégration correspondante.

En référence à la figure 6, initialement, tous les signaux sont par exemple au niveau de la masse, excepté le signal SW. Le signal SW est par exemple en permanence au niveau VSK, excepté pendant la deuxième opération de lecture comme cela a été décrit précédemment, et excepté pendant la période d'intégration comme cela est décrit ci-après.

Pendant l'opération de réinitialisation de photodiode (RESET PD), les photodiodes du capteur d'image entier sont par exemple réinitialisées pour lancer une période d'intégration globale. Ainsi chacun des signaux RTGᵢ₋₁, RTGᵢ et RTGᵢ₊₁ a une impulsion haute se produisant peu de temps après une impulsion haute du signal de synchronisation CLK. Les signaux de réinitialisation RSTᵢ₋₁, RSTᵢ et RSTᵢ₊₁, et les signaux SWᵢ₋₁, SWᵢ et SWᵢ₊₁, sont tous par exemple hauts pendant toute la période d'intégration.

La période d'intégration a par exemple une durée t_{INT}, et à la fin de la période d'intégration, l'opération d'obturateur global (TRANSFER) est par exemple réalisée pour transférer, en même temps dans chaque pixel du capteur d'image, la charge provenant de la photodiode vers le noeud de détection SN. Ainsi chacun des signaux TGᵢ₋₁, TGᵢ et TGᵢ₊₁ a une impulsion haute ayant lieu peu de temps après une autre impulsion haute du signal de synchronisation CLK.

Les rangées de pixels sont par exemple lues une par une d'une façon déroulante, comme cela est représenté par une flèche 602 en figure 6. Dans l'exemple de la figure 6, la séquence de lecture implique toujours une lecture des deux tensions V_{SN} et V_{SN+AN}, et des deux niveaux de réinitialisation V_{RSN} et V_{RSN+AN}. La séquence de lecture de la rangée i-1 a lieu en premier en figure 6, et implique une activation initiale du signal de lecture RDᵢ₋₁. Le signal d'échantillonnage S_{SN} est ensuite activé, et la première opération de lecture est réalisée, pour lire le niveau de tension V_{SN} sur le noeud de détection SN. Le signal SWᵢ₋₁ est ensuite amené du niveau VSK vers le niveau de la tension d'alimentation VDD, et la deuxième opération de lecture est réalisée en activant le signal d'échantillonnage S_{SN+AN} pour lire la tension V_{SN+AN} sur le noeud de détection SN. Le signal de réinitialisation RSTᵢ₋₁ est ensuite activé au niveau VDD pour réinitialiser la tension sur les noeuds SN et AN, et le signal d'échantillonnage S_{RSN+AN} est activé pour provoquer la lecture du niveau de tension V_{SN+AN} sur les noeuds SN et AN. Le signal S_{SN+AN} est aussi par exemple activé pour précharger le condensateur d'échantillonnage correspondant au niveau de réinitialisation. Le signal SW est ensuite ramené au niveau VSK, et le signal d'échantillonnage S_{RSN} est activé pour lire la valeur de réinitialisation V_{RSN} sur le noeud de détection SN. Le signal S_{SN} est aussi par exemple activé pour précharger le condensateur d'échantillonnage correspondant au niveau de réinitialisation. Les séquences de lecture des rangées i et (i+1) sont par exemple identiques.

Bien que dans l'exemple de la figure 6 le signal de commande SW reste au niveau de VSK excepté pendant l'opération d'intégration et de lecture, dans des variantes de réalisation il pourrait être amené à un niveau inférieur comme le niveau de masse la plupart du temps, excepté pendant les opérations de transfert et de lecture. Un avantage d'amener le signal SW à un niveau de tension inférieur est que la tension sur le noeud de détection SN va être mieux conservée.

Un avantage des modes de réalisation décrits ici est qu'un pixel d'un capteur d'image est capable de présenter à la fois une plage dynamique élevée et une forte sensibilité d'une manière relativement simple et sans augmenter de façon significative la taille et la consommation d'énergie du pixel. En effet, en prévoyant un noeud additionnel couplé au noeud de détection par l'intermédiaire d'un transistor contrôlé par une tension intermédiaire pendant la phase de transfert, le gain au niveau du noeud de détection est variable en fonction de la quantité de charge accumulée par la photodiode pendant la période d'intégration.

Avec la description ainsi faite d'au moins un mode de réalisation illustratif, diverses altérations, modifications et améliorations apparaîtront facilement à l'homme de l'art.

Par exemple, bien que les modes de réalisation décrits comprennent une porte de transfert 118 assurant une mise en oeuvre simple à obturateur global, il apparaîtra clairement à l'homme de l'art que dans des variantes de réalisation cette porte de transfert pourrait être omise.

En outre, il apparaîtra clairement à l'homme de l'art que plutôt que d'être à 0 V, la tension de masse pourrait être considérée comme une autre tension d'alimentation qui pourrait être à un niveau quelconque, comme un niveau négatif.

En outre, il apparaîtra clairement à l'homme de l'art que, dans tous les modes de réalisation décrits ici, certains ou la totalité des transistors NMOS pourraient être remplacés par des transistors PMOS et vice versa. En plus ou à la place, certains transistors comme le transistor 112 pourraient être remplacés par des commutateurs NMOS/PMOS. En outre, bien qu'on ait décrit ici des transistors basés sur la technologie MOS, dans des variantes de réalisation on pourrait utiliser d'autres technologies de transistor, comme la technologie bipolaire.

En outre, il apparaîtra clairement à l'homme de l'art que les divers éléments décrits en relation avec les divers modes de réalisation pourraient être combinés, dans des variantes de réalisation, selon des combinaisons quelconques.

## Revendications

1. Capteur d'image comprenant :
au moins un pixel comportant une photodiode (PD) ; un noeud de détection (SN) couplé à la photodiode par l'intermédiaire d'une porte de transfert (104) ; et un autre noeud (AN) couplé au noeud de détection (SN) par l'intermédiaire d'un premier transistor (112) ; et
un circuit de commande (120) adapté à :
appliquer, pendant une opération de réinitialisation des niveaux de tension sur le noeud de détection (SN) et l'autre noeud (AN), un premier niveau de tension (VDD) à un noeud de commande du premier transistor (112) ;
appliquer, pendant une opération de transfert de charge à partir de la photodiode (PD) vers le noeud de détection (SN), un deuxième niveau de tension (VSK) au noeud de commande du premier transistor (112), le deuxième niveau de tension étant inférieur au premier niveau de tension et supérieur à une tension de masse du pixel ; et réaliser, après l'opération de transfert (204), une première opération de lecture (206) pour générer une première valeur (ΔV_{SN}) sur la base de la tension sur le noeud de détection (SN) pendant l'application du deuxième niveau de tension au noeud de commande du premier transisor (112), et une deuxième opération de lecture (208) pour générer une deuxième valeur (ΔV_{SN+AN}) sur la base de la tension sur le noeud de détection pendant l'application du premier niveau de tension au noeud de commande du premier transistor (112).

2. Capteur d'image selon la revendication 1, dans lequel le deuxième niveau de tension (VSK) est inférieur à VRT+V_{TH} et supérieur à VPD+V_{TH}, où VRT est un niveau de tension de réinitialisation appliqué au noeud de détection (SN) et à l'autre noeud (AN) pendant l'opération de réinitialisation, VPD est un niveau de tension fixé de la photodiode et V_{TH} est un niveau de tension de seuil du premier transistor (112).

3. Capteur d'image selon l'une quelconque des revendications 1 ou 2, dans lequel pendant l'opération de transfert, le circuit de commande (120) est en outre adapté à appliquer le premier niveau de tension (VDD) à un noeud de commande de la porte de transfert (104).

4. Capteur d'image selon la revendication 1, dans lequel le circuit de commande (120) est en outre adapté à :
comparer la première valeur (ΔV_{SN}) à un niveau de seuil (V_{S}).

5. Capteur d'image selon la revendication 4, comprenant en outre un bloc de sortie (122) couplé au noeud de détection par l'intermédiaire d'un circuit de lecture (106, 108) du pixel, dans lequel sur la base de la comparaison de la première valeur au niveau de seuil (V_{S}), le bloc de sortie (122) est agencé pour :
générer une valeur de pixel (PIX) sur la base de la première valeur ; ou
générer une valeur de pixel (PIX) sur la base de la deuxième valeur.

6. Capteur d'image selon l'une quelconque des revendications 1 à 5, dans lequel ledit au moins un pixel comprend en outre un transistor de réinitialisation (116) ayant l'un de ses noeuds de courant principaux connecté à l'autre noeud (AN) et son autre noeud de courant principal couplé à un rail de tension d'alimentation.

7. Capteur d'image selon l'une quelconque des revendications 1 à 5, dans lequel ledit au moins un pixel comprend en outre un transistor de réinitialisation (116) ayant l'un de ses noeuds de courant principaux connecté au noeud de détection (SN) et son autre noeud de courant principal couplé à un rail de tension d'alimentation.

8. Capteur d'image selon l'une quelconque des revendications 1 à 7, dans lequel ledit au moins un pixel comprend en outre une deuxième porte de transfert (118) couplée entre la photodiode (PD) et un rail de tension d'alimentation.

9. Capteur d'image selon la revendication 8, dans lequel le circuit de commande (120) est adapté à contrôler la deuxième porte de transfert (118) dudit au moins un pixel pour réinitialiser la photodiode (PD) pour réaliser une réinitialisation globale du capteur d'image.

10. Procédé pour actionner au moins un pixel d'un capteur d'image, ledit au moins un pixel comportant : une photodiode (PD) ; un noeud de détection (SN) couplé à la photodiode par l'intermédiaire d'une porte de transfert (104) ; et un autre noeud (AN) couplé au noeud de détection (SN) par l'intermédiaire d'un premier transistor (112), le procédé comprenant :
- appliquer, par un circuit de commande (120) pendant une opération de réinitialisation des niveaux de tension sur le noeud de détection (SN) et l'autre noeud (AN), un premier niveau de tension (VDD) sur un noeud de commande du premier transistor ;
- appliquer, par le circuit de commande (120) pendant une opération de transfert de charge à partir de la photodiode (PD) vers le noeud de détection (SN), un deuxième niveau de tension (VSK) au noeud de commande du premier transistor (112), le deuxième niveau de tension étant inférieur au premier niveau de tension et supérieur à une tension de masse du pixel ; et
- réaliser, après l'opération de transfert (204), une première opération de lecture (206) pour générer une première valeur (ΔV_{SN}) sur la base de la tension sur le noeud de détection (SN) pendant l'application du deuxième niveau de tension au noeud de commande du premier transistor (112), et une deuxième opération de lecture (208) pour générer une deuxième valeur (ΔV_{SN+AN}) sur la base de la tension sur le noeud de détection pendant l'application du premier niveau de tension au noeud de commande du premier transistor (112).

11. Procédé selon la revendication 10, dans lequel le deuxième niveau de tension (VSK) est inférieur à VRT+V_{TH} et supérieur à VPD+V_{TH}, où VRT est un niveau de tension de réinitialisation appliqué au noeud de détection (SN) et à l'autre noeud (AN) pendant l'opération de réinitialisation, VPD est le niveau de tension fixé de la photodiode et V_{TH} est un niveau de seuil du premier transistor (112).

12. Procédé selon la revendication 10 ou 11, comprenant en outre l'application, pendant l'opération de transfert, du premier niveau de tension (VDD) à la porte de transfert (104).

13. Procédé selon la revendication 10, comprenant en outre :
comparer la première valeur (ΔV_{SN}) à un niveau de seuil (V_{S}).

14. Procédé selon la revendication 13, comprenant en outre :
générer, sur la base de la comparaison de la première valeur au niveau de seuil (V_{S}),
une valeur de pixel (PIX) sur la base de la première valeur ; ou
une valeur de pixel (PIX) sur la base de la deuxième valeur.

## Patentansprüche

1. Ein Bildsensor, der Folgendes aufweist:
wenigstens ein Pixel mit einer Photodiode (PD); einen Abfühlknoten (sensing node = SN), der über ein Transfergate (104) mit der Photodiode gekoppelt ist; und ein weiterer Knoten (AN), der mit dem Abfühlknoten (SN) über einen ersten Transistor (112) gekoppelt ist; und
eine Steuerschaltung (120), die geeignet ist:
zum Anlegen während einer Rücksetzoperation der Spannungspegel an den Abfühlknoten (SN) und dem weiteren Knoten (AN), eines ersten Spannungspegels (VDD) an einen Steuerknoten des ersten Transistors (112);
zum Anlegen während einer Transferoperation von Ladung von der Photodiode (PD) an den Abfühlknoten (SN), eines zweiten Spannungspegels (VSK) an den Steuerknoten des ersten Transistors (112), wobei der zweite Spannungspegel niedriger ist als der erste Spannungspegel und höher als eine Massespannung des Pixels; und
zum Durchführen, nach der Transferoperation (204), einer ersten Leseoperation (206) zum Erzeugen eines ersten Wertes (ΔV_{SN}) basierend auf der Spannung an dem Abfühlknoten (SN) während der zweite Spannungspegel an den Steuerknoten des ersten Transistors (112) angelegt wird, und einer zweiten Leseoperation (208) zum Erzeugen eines zweiten Wertes (ΔV_{SN+AN}) basierend auf der Spannung an dem Abfühlknoten während der erste Spannungspegel an den Steuerknoten des ersten Transistors (112) angelegt wird.

2. Bildsensor nach Anspruch 1, wobei der zweite Spannungspegel (VSK) niedriger ist als VRT+V_{TH} und höher als VPD+V_{TH}, wobei VRT ein Rücksetzspannungspegel ist, der an den Abfühlknoten (SN) und den weiteren Knoten (AN) während der Rücksetzoperation angelegt wird, VPD ein fester Spannungspegel der Photodiode ist und V_{TH} ein Schwellenwertspannungspegel des ersten Transistors (112) ist.

3. Bildsensor nach Anspruch 1 oder 2, wobei während der Transferoperation die Steuerschaltung (120) ferner geeignet ist, den ersten Spannungspegel (VDD) an einen Steuerknoten des Transfergates (104) anzulegen.

4. Bildsensor nach Anspruch 1, wobei die Steuerschaltung (120) ferner geeignet ist: zum Vergleichen des ersten Wertes (ΔV_{SN}) mit einem Schwellenwertpegel (Vs).

5. Bildsensor nach Anspruch 4, der ferner einen Ausgangsblock (122) aufweist, der an den Abfühlknoten über eine Ausleseschaltung (106, 108) des Pixels gekoppelt ist, wobei basierend auf dem Vergleich des ersten Wertes mit dem Schwellenwertpegel (Vs), der Ausgangsblock (122) angeordnet ist zum entweder:
Erzeugen eines Pixelwertes (PIX) basierend auf dem ersten Wert; oder
Erzeugen eines Pixelwertes (PIX) basierend auf dem zweiten Wert.

6. Bildsensor nach einem der Ansprüche 1 bis 5, wobei der wenigstens eine Pixel ferner einen Rücksetztransistor (116) aufweist, dessen einer Hauptstromknoten mit dem weiteren Knoten (AN) und dessen anderer Hauptstromknoten mit einer Versorgungsspannungschiene verbunden ist.

7. Bildsensor nach einem der Ansprüche 1 bis 5, wobei das wenigstens eine Pixel ferner einen Rücksetztransistor (116) aufweist, dessen einer Hauptstromknoten mit dem Abfühlknoten (SN) und dessen anderer Hauptstromknoten mit einer Versorgungsspannungschiene verbunden ist.

8. Bildsensor nach einem der Ansprüche 1 bis 7, wobei das wenigstens eine Pixel ferner ein zweites Transfergate (118) aufweist, das zwischen der Photodiode (PD) und einer Versorgungsspannungsschiene gekoppelt ist.

9. Bildsensor nach Anspruch 8, wobei die Steuerschaltung (120) geeignet ist zum Steuern des zweiten Transfergates (118) des wenigstens einen Pixels zum Zurücksetzen der Photodiode (PD), um ein umfassendes Zurücksetzen des Bildsensors durchzuführen.

10. Verfahren zum Betrieb wenigstens eines Pixels eines Bildsensors, wobei das wenigstens eine Pixel Folgendes aufweist: eine Photodiode (PD); einen Abfühlknoten (SN), der über das Transfergate (104) an die Photodiode gekoppelt ist; und einen weiteren Knoten (AN), der über einen ersten Transistor (112) an den Abfühlknoten (SN) gekoppelt ist, wobei das Verfahren Folgendes aufweist:
Anlegen durch eine Steuerschaltung (120) während einer Rücksetzoperation der Spannungspegel an dem Abfühlknoten (SN) und dem weiteren Knoten (AN) eines ersten Spannungspegels (VDD) an einen Steuerknoten des ersten Transistors;
Anlegen durch die Steuerschaltung (120) während einer Transferoperation der Ladung von der Photodiode (PD) zu dem Abfühlknoten (SN) eines zweiten Spannungspegels (VSK) an den Steuerknoten des ersten Transistors (112), wobei der zweite Spannungspegel niedriger ist als der erste Spannungspegel und höher als eine Massespannung des Pixels; und
Ausführen nach der Transferoperation (204), einer ersten Leseoperation (206) zum Erzeugen eines ersten Wertes (ΔV_{SN}) basierend auf der Spannung an dem Abfühlknoten (SN) während der zweite Spannungspegel an den Steuerknoten des ersten Transistors (112) angelegt wird, und einer zweiten Leseoperation (208) zum Erzeugen eines zweiten Wertes (ΔV_{SN+AN}) basierend auf der Spannung an dem Abfühlknoten während der erste Spannungspegel an den Steuerknoten des ersten Transistors (112) angelegt wird.

11. Verfahren nach Anspruch 10, wobei der zweite Spannungspegel (VSK) niedriger ist als VRT+V_{TH} und höher als VPD+V_{TH}, wobei VRT ein Rücksetzspannungspegel ist, der an den Abfühlknoten (SN) und weiteren Knoten (AN) während der Rücksetzoperation angelegt wird, wobei VPD der feste Spannungspegel der Photodiode ist und V_{TH} ein Schwellenwertpegel des ersten Transistors (112) ist.

12. Verfahren nach Anspruch 10 oder 11, das ferner während der Transferoperation das Anlegen des ersten Spannungspegels (VDD) an das Transfergate (104) aufweist.

13. Verfahren nach Anspruch 10, das ferner Folgendes aufweist:
Vergleichen des ersten Wertes (ΔV_{SN}) mit einem Schwellenwertpegel (Vs).

14. Verfahren nach Anspruch 13, das ferner Folgendes aufweist:
Erzeugen basierend auf dem Vergleich des ersten Wertes mit dem Schwellenwertpegel (Vs) entweder:
eines Pixelwertes (PIX) basierend auf dem ersten Wert; oder
eines Pixelwertes (PIX) basierend auf dem zweiten Wert.

## Claims

1. An image sensor comprising:
at least one pixel having a photodiode (PD); a sensing node (SN) coupled to the photodiode via a transfer gate (104); and a further node (AN) coupled to the sensing node (SN) via a first transistor (112); and
a control circuit (120) adapted:
to apply, during a reset operation of the voltage levels at the sensing node (SN) and further node (AN), a first voltage level (VDD) to a control node of the first transistor (112);
to apply, during a transfer operation of charge from the photodiode (PD) to the sensing node (SN), a second voltage level (VSK) to the control node of the first transistor (112), the second voltage level being lower than the first voltage level and higher than a ground voltage of the pixel; and
to perform, after the transfer operation (204), a first read operation (206) to generate a first value (ΔV_{SN}) based on the voltage at the sensing node (SN) while the second voltage level is applied to the control node of the first transistor (112), and a second read operation (208) to generate a second value (ΔV_{SN+AN}.) based on the voltage at the sensing node while applying the first voltage level to the control node of the first transistor (112).

2. The image sensor of claim 1, wherein the second voltage level (VSK) is lower than VRT+V_{TH} and higher than VPD+V_{TH}, where VRT is a reset voltage level applied to the sensing node (SN) and further node (AN) during the reset operation, VPD is a pinned voltage level of the photodiode and V_{TH} is a threshold voltage level of the first transistor (112).

3. The image sensor of claim 1 or 2, wherein during the transfer operation the control circuit (120) is further adapted to apply the first voltage level (VDD) to a control node of the transfer gate (104).

4. The image sensor of claim 1, wherein the control circuit (120) is further adapted:
to compare the first value (ΔV_{SN}) with a threshold level (V_{S}).

5. The image sensor of claim 4, further comprising an output block (122) coupled to the sensing node via a read-out circuit (106, 108) of the pixel, wherein based on the comparison of the first value with the threshold level (V_{S}), the output block (122) is arranged to either:
generate a pixel value (PIX) based on the first value; or
generate a pixel value (PIX) based on the second value.

6. The image sensor of any of claims 1 to 5, wherein the at least one pixel further comprises a reset transistor (116) having one of its main current nodes connected to the further node (AN) and its other main current node coupled to a supply voltage rail.

7. The image sensor of any of claims 1 to 5, wherein the at least one pixel further comprises a reset transistor (116) having one of its main current nodes connected to the sensing node (SN) and its other main current node coupled to a supply voltage rail.

8. The image sensor of any of claims 1 to 7, wherein the at least one pixel further comprises a second transfer gate (118) coupled between the photodiode (PD) and a supply voltage rail.

9. The image sensor of claim 8, wherein the control circuit (120) is adapted to control said second transfer gate (118) of the at least one pixel to reset the photodiode (PD) to perform a global reset of the image sensor.

10. A method of operating at least one pixel of an image sensor, the at least one pixel having: a photodiode (PD); a sensing node (SN) coupled to the photodiode via a transfer gate (104); and a further node (AN) coupled to the sensing node (SN) via a first transistor (112), the method comprising:
- applying, by a control circuit (120) during a reset operation of the voltage levels at the sensing node (SN) and further node (AN), a first voltage level (VDD) to a control node of the first transistor;
- applying, by the control circuit (120) during a transfer operation of charge from the photodiode (PD) to the sensing node (SN), a second voltage level (VSK) to the control node of the first transistor (112), the second voltage level being lower than the first voltage level and higher than a ground voltage of the pixel; and
- performing, after the transfer operation (204), a first read operation (206) to generate a first value (ΔVSN) based on the voltage at the sensing node (SN) while the second voltage level is applied to the control node of the first transistor (112), and a second read operation (208) to generate a second value (ΔVSN+AN) based on the voltage at the sensing node while applying the first voltage level to the control node of the first transistor (112).

11. The method of claim 10, wherein the second voltage level (VSK) is lower than VRT+V_{TH} and higher than VPD+V_{TH}, where VRT is a reset voltage level applied to the sensing node (SN) and further node (AN) during the reset operation, VPD is the pinned voltage level of the photodiode and V_{TH} is a threshold level of the first transistor (112).

12. The method of claim 10 or 11, further comprising applying, during the transfer operation, the first voltage level (VDD) to the transfer gate (104).

13. The method of claim 10, further comprising:
comparing the first value (ΔV_{SN}) with a threshold level (V_{S}).

14. The method of claim 13, further comprising:
generating, based on the comparison of the first value with the threshold level (V_{S}), either:
a pixel value (PIX) based on the first value; or
a pixel value (PIX) based on the second value.
